# EUROPÄISCHE PATENTSCHRIFT

(11) **EP 2 728 569 B1**
(45) Veröffentlichungstag und Bekanntmachung des Hinweises auf die Patenterteilung: **06.07.2016**
(21) Anmeldenummer: 14151911.6
(22) Anmeldetag: 11.02.2005
(51) Int. Cl.: G09F 3/10, B29K 105/02

(54) **Folienetikett für Mehrwegbehälter**
Layered label for reusable containers
Etiquettes multicouches pour conteneurs réutilisables

(30) Priorität: 12.02.2004 DE 202004002207 U
(43) Veröffentlichungstag der Anmeldung: 07.05.2014
(62) Teilanmeldung aus: 05002985.9
(73) Patentinhaber: CCL Label Meerane GmbH, 08393 Meerane (DE)
(72) Erfinder: Johlke, Dr. Harry, 83646 Bad Tölz (DE); Schmid, Knut, 70565 Stuttgart (DE)
(74) Vertreter: Weickmann & Weickmann PartmbB

(56) Entgegenhaltungen:
- EP-A2- 0 951 004
- WO-A1-2004/061802
- DE-A1- 19 743 657
- JP-A- 9 114 382
- US-A- 6 165 304
- US-A1- 2001 036 542

## Beschreibung

Die Erfindung betrifft ein Etikett, das mittels Nassleim auf einen Gegenstand, insbesondere einen Mehrwegbehälter, klebbar ist und eine gereckte Kunststofffolie aufweist, die zur Ablösung des Etiketts von dem Gegenstand unter Wärmeeinwirkung rückschrumpft.

Ein solches Etikett ist aus der EP 0 951 004 A2 bekannt. Das dort gezeigte, auf Mehrwegflaschen klebbare Etikett schrumpft unter Wärmeeinwirkung, etwa in einer Getränkeflaschen-Waschanlage, zurück, so dass die Haltekraft der Klebstoffschicht überwunden wird und sich das Etikett vom Rand her von der Flasche löst. Bei dem Klebstoff kann es sich unter anderem auch um Nassleim handeln, wie er üblicherweise zum Aufkleben von Etiketten auf Getränkeflaschen benutzt wird. In der Getränkeindustrie ist zum Aufkleben der Etiketten Nassleim bevorzugt, da hierzu die meist bereits vorhandenen Etikettierungsmaschinen benutzt werden können, während die Verwendung von Selbstklebeetiketten, wie zum Beispiel auch aus der EP 0 510 403 A1 bekannt, die Verwendung spezieller Etikettierungsmaschinen erfordert.

Für die Nassverleimung eignen sich insbesondere Papieretiketten. Nach dem Etikettieren entweicht das Wasser des Leims durch die Papierporen, und zum Ablösen dringt das Waschwasser durch das Papier ein und löst den Leim wieder auf.

Auch in der Getränkeindustrie gewinnen Kunststoffetiketten zunehmende Bedeutung, weil sie genauer und vielseitiger bedruckbar sind, eine glänzende Oberfläche haben sowie für sogenannte No-Label-Look-Anwendungen geeignet sind, worin hochtransparente Folienetiketten dort, wo sie unbedruckt sind, eine Durchsicht auf die Flasche bzw. das Füllgut erlauben.

Allerdings ist die Verarbeitung solcher Kunststoffetiketten mit Nassleim nicht unproblematisch, da der Nassleim nur schlecht auf dem Kunststoffmaterial haftet und unmittelbar nach dem Etikettieren das Wasser nur schwer entweichen kann. Wenn man versucht, die Etiketten auf den Gegenstand aufzuwalzen oder zu massieren, um die Anfangsklebkraft zu erhöhen oder Luftblasen und Schaum seitlich herauszudrücken, kann sich das Etikett leicht verschieben.

Bei Papieretiketten wird der Nassleim häufig in einem Linienmuster aufgetragen, um Leim einzusparen und der Waschflüssigkeit einen schnelleren Zutritt zwischen das Etikett und den Gegenstand zu ermöglichen. Dieses Linienmuster stört bei Verwendung transparenter Folie optisch und macht die oben genannte "No-Label-Look"-Anwendung nicht möglich.

Da Kunststofffolien deutlich weniger luftdurchlässig sind als Papieretiketten, bilden sich unter der Kunststofffolie besonders leicht Blasen.

Folien, die sowohl schrumpffähig sind als auch Feuchtigkeit aufnehmen können, sind nicht erhältlich.

Aus US 2001/0036542 A1 ist ein Nassleim-Etikett auf der Basis eines mehrlagigen, metallisierten Kunststofffolienetikett bekannt. Das mit Nassleim auf einen Behälter, z.B. eine Flasche aufzuklebende Etikett umfasst biaxial orientierte, opake Folien, von denen zumindest die leimseitige Folie als geschäumte poröse Schicht ausgebildet ist. Die poröse Schicht absorbiert Feuchtigkeit des Nassleims und verbessert hierdurch die Befeuchtung und Haftung des Nassleims am Etikett.

Aufgabe der Erfindung ist es daher, ein Etikett der eingangs genannten Art anzugeben, welches sich mittels Nassleim schnell und sicher auf einem Gegenstand, insbesondere einem Mehrwegbehälter, zum Beispiel einer Getränkeflasche, befestigen und später problemlos davon wieder ablösen lässt.

Diese Aufgabe wird erfindungsgemäß durch die in Anspruch 1 angegebenen Merkmale gelöst.

Gemäß der Erfindung wird vorgeschlagen, das Etikett der eingangs genannten Art so auszugestalten, dass es auf seiner Leimseite mit einer die Feuchtigkeit des Leims aufnehmenden Schicht versehen ist oder diese Schicht bildet. Diese Feuchtigkeit aufnehmende Schicht beschleunigt das Abtrocknen des Leims nach dem Etikettieren und verhindert ein Verrutschen des Etiketts unmittelbar nach dem Etikettieren. Beim Abwaschen des Etiketts nimmt diese Schicht Waschwasser auf und erleichtert den Zutritt des Wassers zu dem Leim zu dessen Auflösung.

Die die Feuchtigkeit des Leims aufnehmende Schicht weist quellbare Eigenschaften auf, mit dem Ziel, beim Etikettieren die Leimfeuchtigkeit möglichst rasch dem Leim zu entziehen.

Das Etikett kann auf seiner Leimseite flächenvergrößernd strukturiert sein. Die Flächenvergrößerung der Leimseite - im Folgenden auch Unterseite des Etiketts genannt - bietet dem Nassleim eine so große Angriffsfläche, dass bereits unmittelbar nach dem Etikettieren das Etikett ausreichend fest auf dem Gegenstand hält. Zum Etikettieren können gegebenenfalls vorhandene Nassleim-Etikettenvorrichtungen genutzt werden. Zum Ablösen in heißer Waschflüssigkeit - zum Beispiel dem in der Getränkeindustrie üblichen Laugenbad - schrumpft die Folie zurück und löst sich vom Rand ausgehend vom Gegenstand ab, wobei die flächenvergrößerte Unterseite des Etiketts den Eintritt der Waschflüssigkeit begünstigt.

Um diese Flächenvergrößerung zu erlangen, kann die Leimseite des Etiketts mechanisch oder chemisch aufgerauht sein, oder auch flächenvergrößernd geprägt oder feingeprägt sein, wobei hierbei eine Prägetiefe von < 200 µm bevorzugt ist, welche der Dicke der Kunststofffolie angenähert sein kann. Eine derart geringe Prägetiefe genügt, um die einerseits gewünschte Haftverbesserung für den Nassleim zu erreichen, ist aber andererseits, wenn mit Leim verfüllt, optisch kaum sichtbar und ist gegebenenfalls auch mit den oben genannten No-Label-Look-Anwendungen vereinbar.

Bevorzugt können die Einprägungen ein Rippen- und Nutenmuster bilden, wobei die Breite dieser Rippen und Nuten < 1 mm bzw. < 2 mm betragen kann. Das Rippen- und Nutenmuster erleichtert das Eindringen der Waschflüssigkeit unter das Etikett und beschleunigt den Ablösevorgang.

Die Prägetiefe, die Nutbreite und die Dicke der Kunststofffolie können so gewählt sein, dass entweder die Oberseite der Folie im Wesentlichen glatt bleibt, während die Unterseite das Rippen- und Nutenmuster trägt, oder aber die Folie auch auf der Oberseite wellig wird, falls die Nuten besonders tief und breit gewählt sind, um für den Durchtritt von Leimfeuchtigkeit und Waschflüssigkeit Kanäle zu bilden.

In einer Ausführung kann die flächenvergrößernd strukturierte Seite des Etiketts durch die gereckte Kunststofffolie selbst gebildet sein, so dass sich eventuelle Zwischenschichten zwischen der Kunststofffolie und dem Nassleim kostengünstig erübrigen. Dies schließt allerdings das Vorsehen weiterer Schichten auf der vom Nassleim abgewandten Oberseite des Etiketts, wie etwa Dekorationsaufdruck, Kaschierschicht, weitere Schrumpffolienlagen etc. nicht aus.

Alternativ kann auf der Leimseite des Etiketts eine rauhe und matte Lackschicht vorgesehen sein, welche für die gewünschte Flächenvergrößerung der Leimseite sorgt. Diese Lackschicht kann zumindest Teil eines auf die Unterseite der gereckten Kunststofffolie aufgebrachten Dekorationsaufdrucks sein.

Bevorzugt ist das Etikett luft- bzw. dampfdurchlässig flächig durchlöchert, insbesondere genadelt, um zum einen die Trocknung des Leims und den Austritt von Luftblasen und Schaum zu erleichtern und später zum Wiederablösen das Eindringen von Waschflüssigkeit in die Leimschicht zu begünstigen.

Generell kann die gereckte Kunststofffolie so ausgeführt sein, dass sie bei den zum Ablösen benutzten Temperaturen um 25 bis 50 % rückschrumpft. In der Getränkeindustrie hat die Waschlauge (verdünnte Natronlauge) typischerweise eine Temperatur von 60 bis 90°C. Dies reicht aus, dass sich das Etikett ohne mechanische Unterstützung in Form von Bürsten, Hochdruckdüsen etc. von dem Gegenstand ablösen lässt. Auch möglich sind solche Folien, die bei 120 bis 130°C um 70 bis 80 % rückschrumpfen, zum Ablösen des Etiketts etwa mittels Heißluft, Wärmestrahlung oder Heißdampf.

Die gereckte Kunststofffolie kann auf ihrer dem Leim zugewandten Unterseite oder der davon abgewandten Oberseite einen Dekorationsaufdruck tragen. Im Falle von oben liegendem Dekorationsaufdruck kann dieser mittels einer Kaschierschicht schützend überdeckt sein.

Bevorzugt hat die gereckte Kunststofffolie eine Dicke von 50 bis 80 µm. Der Nassleim wird bevorzugt mit einer Dicke von 20 bis 50 µm flächig aufgetragen. Hierbei lässt sich die eingesetzte Leimmenge, im Vergleich zu Papieretiketten, um 50 % reduzieren. Prinzipiell genügt eine partielle Leimauftragung, z.B. in Streifen oder Punktraster, wobei aber für No-Label-Look-Anwendungen eine vollflächige Leimauftragung erforderlich ist.

Zudem sind die erfindungsgemäßen Etiketten billig herstellbar und mit geringem Aufwand verleimbar und ablösbar.

Die Erfindung wird nachfolgend anhand von Ausführungsbeispielen unter Hinweis auf die beigefügten Zeichnungen beschrieben.
Fig. 1 zeigt einen axialen Längsschnitt durch eine zylindrische Flaschenwand mit aufgeleimtem Etikett einer ersten Ausführung;
Fig. 2 zeigt einen Längsschnitt ähnlich Fig. 1, jedoch mit sich ablösendem Etikett;
Fig. 3 zeigt einen Querschnitt durch ein zweites Ausführungsbeispiel eines Etiketts;
Fig. 4 zeigt einen Querschnitt durch ein drittes Ausführungsbeispiel des Etiketts und
Fig. 5 zeigt einen Querschnitt durch ein viertes Ausführungsbeispiel des Etiketts.

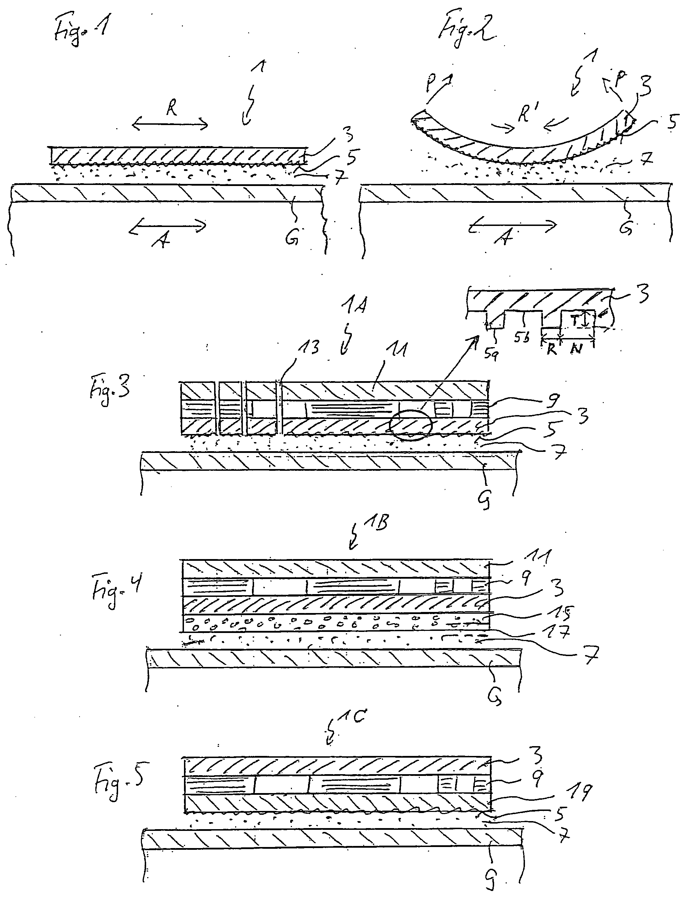

Fig. 1 zeigt schematisch ein im Rahmen der Erfindung nutzbares Etikett 1 mit einer rückschrumpfbar gereckten Kunststofffolie 3 als Trägermaterial, deren zu einem Gegenstand G - hier zum Beispiel eine zylindrische Getränkeflasche - weisende Seite 5 flächenmäßig vergrößert strukturiert ist, und diese wiederum mit Nassleim 7 in Kontakt steht, der das Etikett 1 auf dem Gegenstand G hält. Die Hauptreckrichtung R der monoaxial oder biaxial gereckten Folie 3 erstreckt sich in der Achsrichtung A des zylindrischen Gegenstands. Zum Ablösen des Etiketts wird dieses erhitzt und Feuchtigkeit ausgesetzt, im Falle von Getränkeflaschen typischerweise 60 bis 90°C heißer verdünnter Natronlauge, wodurch die Folie 3 in ihrer Hauptreckrichtung R' rückschrumpft und vom Rand her sich der Leim 7 anlöst, so dass das Etikett nach und nach vom axialen Rand ausgehend vom Gegenstand G ablöst, wie in Fig. 2 mit den Pfeilen P angedeutet.

Als Materialien für die thermisch rückschrumpfende Kunststofffolie 3 kommen alle gängigen Folienmaterialien in Frage, insbesondere aber PET (Polyethylenglykolterephthalat), PS (Polystyrol) und PVC (Polyvinylchlorid) oder aber auch PP (Polypropylen), mit einem beim Ablösen auftretenden Rückschrumpf von 20 bis 50 % ihrer ursprünglichen Größe, wobei aber auch darüber hinausgehende Schrumpfgrade in Frage kommen können. Obwohl im Falle zylindrischer Getränkeflaschen deren Achsrichtung A als Hauptreckrichtung R für die schrumpfbare Folie 3 bevorzugt ist, kommen generell auch andere Reckorientierungen in Frage, etwa in Umfangsrichtung des zylindrischen Gegenstands G oder schräg hierzu, je nach Dicke und Klebkraft des verwendeten Nassleims, der Schrumpfkraft des Etikettenmaterials und eines eventuell vorhandenen Krümmungsradius des zu etikettierenden Gegenstands G.

Unter Nassleim versteht sich hier ein wasserlösliches, tierisches, pflanzliches oder auch synthetisches Polymer, hier mit Wasser als Lösungsmittel, insbesondere nach DIN 16920, etwa auf Casein basierende Leime oder solche auf synthetischer Rohstoffbasis, insbesondere solche mit hoher Anfangsklebkraft und Transparenz.

Fig. 3 zeigt einen Querschnitt durch eine zweite Ausführung eines im Rahmen der Erfindung nutzbaren Etiketts 1A. Ähnlich Fig. 1 ist die Leimseite oder Unterseite 5 der gereckten Kunststofffolie 3 flächenvergrößernd ausgestaltet, hier durch feingeprägte Rippen 5a und Nuten 5b, wobei hier die Breite R der Rippen 5a < 1 mm beträgt und die Breite der Nuten N < 2 mm beträgt, bei einer Nutentiefe T von < 200 µm, wie im vergrößerten Ausschnitt von Fig. 2 gezeigt. Obwohl im verleimten Zustand die Nuten 5b von außen optisch unsichtbar vollständig mit Leim 7 gefüllt sind, so können sie doch während des Ablösevorgangs sich zu Kanälen öffnen, welche den Wasserzutritt zur Etikettenunterseite und somit zum Leim begünstigen.

Die Unterseite 5 der Folie kann auch mechanisch oder chemisch aufgerauht sein.

In dieser Ausführung ist die gereckte Folie 3 oberseitig mit einem Aufdruck 9 versehen, der hier wiederum von einer Kaschierfolie 11 abgedeckt sein kann. Dieser Etikettenaufbau ist auch für No-Label-Look-Anwendungen geeignet.

Ferner kann das gesamte Etikett 1A mit einer Vielzahl von zum Beispiel genadelten Löchern 13 durchsetzt sein, welche den Durchtritt der Feuchtigkeit von und zu dem Leim 7 erleichtern sollen. Diese Variante kommt insbesondere für nicht No-Label-Look-Anwendungen in Frage.

Fig. 4 zeigt eine Ausführung eines erfindungsgemäßen Etiketts 1 B mit ähnlichem Schichtaufbau wie in Fig. 3, wobei aber die gereckte Folie 3 auf der Leimseite mit einer quellfähigen Schicht 15 versehen ist, welche unmittelbar nach dem Etikettieren dem Leim 7 Feuchtigkeit entzieht und hierdurch die Haftwirkung verbessert.

Auch kann das Material der Schicht 15 so gewählt sein, dass es sich durch die Leimfeuchtigkeit partiell anlöst und mit dem Leim 7 eine Übergangszone 17 bildet, in der der Leim 7 und das Material der Schicht 15 vermischt sind (in Fig. 4 rechts angedeutet). Geeignete Materialien sind z.B.: wasserbasierende Lacke, Polyvinylalkohol und dessen Derivate (auch insbesondere Acetate), Cellulose und deren Derivate (auch Cellophan), Polymilchsäure und deren Derivate, Stärke und deren Derivate und die bereits genannten Caseine.

Fig. 5 zeigt eine weitere Ausführung eines Etiketts 1C, dessen reckbare Kunststofffolie 3 hier auf der Leimseite bzw. Unterseite des Etiketts mit einem Aufdruck 9 versehen ist, und auf diesen wiederum eine Mattlackschicht 19 aufgetragen ist. Der Mattlack 19 bildet von sich aus eine rauhe Oberfläche 5 zur Vergrößerung der Kontaktoberfläche mit dem Leim 7. Der Aufdruck 9 ist durch die gereckte Folie 3 geschützt. Die Mattlackschicht 19 kann einen optischen Hintergrund für den Aufdruck 9 bilden.

Über die dargestellten Ausführungen hinaus können über oder/und unter der reckbaren Kunststofffolie 3 bzw. der Kaschierfolie 11 bzw. der quellfähigen Schicht 15 weitere Schichten aus reckbarer oder nicht reckbarer Kunststofffolie, Kaschierfolie, Papier, Aufdruckmaterial oder ähnlichem angeordnet sein.

In sämtlichen Ausführungen, insbesondere der ersten und zweiten Ausführung, kann alternativ oder zusätzlich die gereckte Kunststofffolie 3 selbst aus einem quellfähigen Material hergestellt sein, wie z.B. Polymilchsäure.

## Patentansprüche

1. Etikett, das mittels Nassleim (7) auf einen Gegenstand (G), insbesondere einen Mehrwegbehälter, klebbar ist, und eine gereckte Kunststofffolie (3) aufweist, die zur Ablösung des Etiketts (1, 1A, 1 B) von dem Gegenstand (G) unter Wärmeeinwirkung rückschrumpft,
**dadurch gekennzeichnet, dass** das Etikett (1, 1A, 1B) auf seiner Leimseite (5) mit einer die Feuchtigkeit des Leims (7) aufnehmenden, quellbaren Schicht (15) versehen ist und/oder die gereckte Kunststofffolie (3) selbst eine die Feuchtigkeit des Leims (7) aufnehmende, quellbare Schicht ist.

2. Etikett nach Anspruch 1, **dadurch gekennzeichnet, dass** sich die die Feuchtigkeit des Leims aufnehmende Schicht (15) durch die Leimfeuchtigkeit anlöst und mit dem Leim (7) eine Mischzone (17) bildet.

3. Etikett nach Anspruch 1 oder 2, **dadurch gekennzeichnet, dass** die die Feuchtigkeit aufnehmende Schicht (15) aus wasserbasiertem Lack, aus Polyvinylalkohol oder dessen Derivaten, insbesondere Acetaten, aus Cellulose und deren Derivaten, aus Polymilchsäure oder deren Derivaten, aus Stärke oder deren Derivaten oder aus Caseinen gebildet ist.

4. Etikett nach einem der vorhergehenden Ansprüche, **dadurch gekennzeichnet, dass** die gereckte Kunststofffolie (3) bei Temperaturen im Bereich von 60 bis 90°C um 25 bis 50 % rückschrumpft, und/oder bei mehr als 120°C, um mehr als 70 % rückschrumpft.

5. Etikett nach einem der vorhergehenden Ansprüche, **dadurch gekennzeichnet, dass** die gereckte Kunststofffolie (3) auf ihrer dem Leim (7) zugewandten Unterseite oder der davon abgewandten Oberseite einen Aufdruck (9) trägt.

6. Etikett nach Anspruch 5, **dadurch gekennzeichnet, dass** bei oben liegendem Aufdruck (9) dieser mittels einer Kaschierschicht (11) überdeckt ist.

7. Etikett nach einem der vorhergehenden Ansprüche, **dadurch gekennzeichnet, dass** die gereckte Kunststofffolie (3) auf ihrer vom Gegenstand (G) abgewandten Seite mit zumindest einer weiteren Schicht (11), insbesondere im Wesentlichen nicht rückschrumpfenden Schicht (11), versehen ist.

8. Etikett nach einem der vorhergehenden Ansprüche, **dadurch gekennzeichnet, dass** das Etikett (1A) eine Vielzahl luft- bzw. dampfdurchlässiger Löcher (13) enthält, die in das Etikettenmaterial eingestanzt oder eingenadelt sind.

9. Etikett nach einem der vorhergehenden Ansprüche, **dadurch gekennzeichnet, dass** es als "No-Label-Look" Etikett ausgebildet ist.

10. Etikett nach einem der vorhergehenden Ansprüche, **dadurch gekennzeichnet, dass** das Etikett auf seiner Leimseite (5) flächenvergrößernd strukturiert ist.

11. Etikett nach Anspruch 10, **dadurch gekennzeichnet, dass** die Leimseite (5) des Etiketts (1, 1A) mechanisch oder chemisch aufgeraut ist, oder flächenvergrößernd geprägt oder feingeprägt ist, oder auf der Leimseite (5) des Etiketts (1 C) eine raue oder matte Lackschicht (19) vorgesehen ist.

## Claims

1. Label which can be bonded to an object (G), more particularly to a reusable container, by means of wet glue (7), and which comprises an oriented plastics film (3), which, for removing the label (1, 1A, 1B), shrinks away from the object (G) under the influence of heat, **characterised in that** the label (1, 1A, 1B) is provided on the glue side (5) thereof with a layer (15) which absorbs the moisture from the glue (7) and can swell and/or the oriented plastics film (3) is itself a layer which absorbs the moisture from the glue (7) and can swell.

2. Label according to claim 1, **characterised in that** the layer (15) which absorbs the moisture from the glue dissolves owing to the moisture and forms a mixing zone (17) with the glue (7).

3. Label according to either claim 1 or claim 2, **characterised in that** the layer (15) which absorbs the moisture is formed of water-based paint, of polyvinyl alcohol or derivatives thereof, in particular acetates, of cellulose and derivatives thereof, of polylactic acid or derivatives thereof, of starch or derivatives thereof, or of caseins.

4. Label according to any of the preceding claims, **characterised in that** the oriented plastics film (3) shrinks by 25 to 50 % at temperatures of 60 to 90 °C, and/or by more than 70 % at temperatures of more than 120 °C.

5. Label according to any of the preceding claims, **characterised in that** the oriented plastics film (3) carries an imprint (9) on the underside thereof which faces the glue (7) or on the upper side which faces away therefrom.

6. Label according to claim 5, **characterised in that** when the imprint (9) is on the top, it is covered by a laminate layer (11).

7. Label according to any of the preceding claims, **characterised in that** the oriented plastics film (3) is provided with at least a further layer (11), more particularly a substantially non-shrinking layer (11), on the side thereof facing away from the object (G).

8. Label according to any of the preceding claims, **characterised in that** the label (1A) contains a plurality of air-permeable or steam-permeable holes (13) which are stamped or punched into the label material.

9. Label according to any of the preceding claims, **characterised in that** it is in the form of a "no-label-look" label.

10. Label according to any of the preceding claims, **characterised in that** the label is textured on the glue side (5) thereof in a way that increases the surface area.

11. Label according to claim 10, **characterised in that** the glue side (5) of the label (1, 1A) is roughened mechanical or chemically, or is embossed or finely embossed in a way that increases the surface area , or a rough or matt paint layer (19) is provided on the glue side (5) of the label (1C).

## Revendications

1. Étiquette qui peut être collée à l'aide de colle humide (7) sur un objet (G), en particulier un conteneur réutilisable et présente une feuille en matière plastique étirée (3) qui se rétracte sous l'action de la chaleur pour décoller l'étiquette (1, 1A, 1B) de l'objet (G), **caractérisée en ce que** l'étiquette (1, 1A, 1B) est pourvue sur son côté colle (5) d'une couche gonflable (15) absorbant l'humidité de la colle (7) et/ou la feuille en matière plastique étirée (3) est elle-même une couche gonflable absorbant l'humidité de la colle (7).

2. Étiquette suivant la revendication 1, **caractérisée en ce que** la couche (15) absorbant l'humidité de la colle se dissout sous l'action de l'humidité de la colle et forme avec la colle (7) une zone mixte (17).

3. Étiquette suivant la revendication 1 ou 2, **caractérisée en ce que** la couche (15) absorbant l'humidité est formée à partir d'une laque aqueuse, d'un alcool polyvinylique ou de ses dérivés, en particulier d'acétates, de cellulose et de ses dérivés, d'acide polylactique ou de ses dérivés, d'amidon ou de ses dérivés ou de caséine.

4. Étiquette suivant l'une des revendications précédentes, **caractérisée en ce que** la feuille en matière plastique étirée (3) se rétracte de 25 à 50 % à des températures dans la plage de 60 à 90°C et/ou se rétracte de plus de 70 % à plus de 120°C.

5. Étiquette suivant l'une des revendications précédentes, **caractérisée en ce que** la feuille en matière plastique étirée (3) porte une impression (9) sur sa face inférieure côté colle (7) ou sur la face supérieure qui en est éloignée.

6. Étiquette suivant la revendication 5, **caractérisée en ce que**, si l'impression (9) se trouve en haut, celle-ci est recouverte à l'aide d'une couche de masquage (11).

7. Étiquette suivant l'une des revendications précédentes, **caractérisée en ce que** la feuille en matière plastique étirée (3) est pourvue sur sa face éloignée de l'objet (G) d'au moins une couche supplémentaire (11), en particulier d'une couche essentiellement non rétractable (11).

8. Étiquette suivant l'une des revendications précédentes, **caractérisée en ce que** l'étiquette (1A) contient un grand nombre de trous (13) perméables à l'air et à la vapeur qui sont estampés ou percés dans le matériau de l'étiquette.

9. Étiquette suivant l'une des revendications précédentes, **caractérisée en ce qu'**elle est formée comme "étiquette invisible".

10. Étiquette selon l'une des revendications précédentes, **caractérisée en ce que** l'étiquette est structurée avec augmentation de surface sur son côté colle (5).

11. Étiquette suivant la revendication 10, **caractérisée en ce que** le côté colle (5) de l'étiquette (1, 1A) est rendu rugueux par voie mécanique ou chimique, ou est gaufré ou finement gaufré avec augmentation de surface, ou **en ce qu'**une couche de laque rugueuse ou mate (19) est prévue du côté colle (5) de l'étiquette (1C).
